# EUROPEAN PATENT APPLICATION

(11) **EP 4 152 161 A1**
(43) Date of publication of application: **22.03.2023**
(21) Application number: 20935250.9
(22) Date of filing: 12.05.2020
(51) Int. Cl.: G06F 11/20, G06Q 20/38

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: FUJIMOTO, Shingo, Kawasaki-shi, Kanagawa 211-8588 (JP); MORINAGA, Masanobu, Kawasaki-shi, Kanagawa 211-8588 (JP)
(74) Representative: Hoffmann Eitle
(86) International application number: PCT/JP2020/019003
(87) International publication number: WO 2021/229691

(57) **Abstract**

Processing nodes (100) is arranged in a redundant configuration in a first blockchain (BC1), to detect generation of transaction data (D) on a first transaction in the first blockchain (BC1), and control whether to transmit a remote transaction after the first transaction to a second blockchain (BC2) based on the transaction data. For example, each processing node (100) performs a hash operation on data contents of the transaction data (D), and determines a priority order of execution of the remote transaction by each processing node (100). The remote transaction is transmitted to the second blockchain (BC2) when the priority order of a processing node A (100) is highest, transmission of the remote transaction to the second blockchain (BC2) is set to stand by when the priority order of the processing node A (100) is second highest or lower, thereby removing the need for special exclusive control in the redundant configuration.

## Description

### FIELD

The present invention relates to a control method, a control program, and an information processing apparatus that control transactions by cooperation of multiple blockchains.

### BACKGROUND

In recent years, application of blockchains as distributed ledger management technology has been expected. For example, distributed ledger blockchains are capable of securely making transactions and managing important digital assets, such as cryptocurrencies, digital bonds, and the like, by protecting them by cryptography. On the other hand, in the operation of the blockchains, validity of asset transactions need to be verified, and a procedure (logic) for verifying the validity significantly differs depending on an asset type, whereby fragmentation of the market due to individually constructed blockchains for each use is becoming a problem.

As a solution to the problem of market fragmentation, blockchain collaboration services for linking and integrating multiple blockchain ledgers are attracting attention. As a collaboration service, for example, with a smart contract intermediating between blockchains, it becomes possible to link a blockchain that manages a ledger for asset management and a blockchain that manages a ledger for payment settlement for services.

Conventionally, as a technique related to the distributed ledger, there is a technique of suppressing processing conflict between processing nodes by updating a distributed database to perform exclusive control between the processing nodes when the same processing occurs in different processing nodes in a blockchain, for example. Furthermore, there is a technique in which a load-distributed and multiplexed device refers to a history of transaction increase/decrease processing to suppress duplication of the same transaction on the basis of a transaction report message. Furthermore, in the management of direct transactions by peer-to-peer (P2P), there is a technique of managing smart contracts using the distributed ledger technology and ensuring redundancy for dealing with occurrence of failures by sharing the same information such as electronic signatures between processing nodes managed by multiple members (e.g., see Patent Documents 1 to 3 set out below).

### SUMMARY

### TECHNICAL PROBLEM

For example, as an example of the collaboration of multiple blockchain ledgers, in a control system for securities/credit management or the like, a remote transaction may be submitted (executed) to another blockchain in conjunction with a transaction fixed in one blockchain. Here, making multiple processing nodes of the blockchain into a redundant configuration will be considered. According to this redundant configuration, each of the multiple processing nodes is enabled to submit a remote transaction, which ensures submission of the remote transaction even when a communication failure or the like occurs, and ensuring operational continuity of the control system may be expected.

However, in the case of the redundant configuration in which each of the multiple processing nodes of the blockchain simply submits a remote transaction, there is no wait for processing between the processing nodes when a smart contract executes the remote transaction, and each of the processing nodes (server group) operates with the same logic. In this case, if exclusive control is not performed between the processing nodes, a problem arises that the same remote transaction is submitted multiple times from the multiple processing nodes. Here, in a case where, for example, the processing nodes communicate with each other for the exclusive control, a problem arises that the communication between the processing nodes and the processing load increase in each of the processing nodes.

In one aspect, an object of the present invention is to obtain certainty of transactions by making blockchain processing nodes redundant and to remove the need for special exclusive control.

### SOLUTION TO PROBLEM

According to one aspect of the present invention, there is provided a control method for a plurality of processing nodes arranged in a redundant configuration in a first blockchain, in which the plurality of processing nodes is configured to: detect generation of transaction data related to a first transaction in the first blockchain stored in each of the processing nodes; and control whether or not to transmit a second transaction to be executed after the first transaction to a second blockchain on the basis of the detected transaction data.

### ADVANTAGEOUS EFFECTS OF INVENTION

According to one aspect of the present invention, effects that certainty of transactions may be obtained by making blockchain processing nodes redundant and the need for special exclusive control may be removed are exerted.

### BRIEF DESCRIPTION OF DRAWINGS

FIG. 1 is an explanatory diagram of exemplary remote transaction control according to an embodiment;
FIG. 2 is a block diagram for explaining each function of a control system according to the embodiment;
FIG. 3 is a diagram illustrating an exemplary hardware configuration of an information processing apparatus according to the embodiment;
FIG. 4 (i.e., FIGs. 4A to 4D) is a diagram for explaining a remote transaction execution procedure according to the embodiment;
FIG. 5 is a diagram for explaining autonomous exclusive control of each processing node according to the embodiment;
FIG. 6 is a diagram for explaining transaction data and priority order determination according to the embodiment;
FIG. 7 is a flowchart illustrating an exemplary process to be performed by the processing node according to the embodiment;
FIG. 8 is a flowchart illustrating an exemplary process to be performed by a signature server according to the embodiment; and
FIG. 9 is a diagram for explaining another method of determining the priority order for executing a remote transaction according to the embodiment.

### DESCRIPTION OF EMBODIMENTS

Hereinafter, an embodiment of a control method, a control program, an information processing apparatus, and a control system disclosed herein will be described in detail with reference to the drawings.

In the embodiment, in cooperation between blockchains (BCs) in which a remote transaction is submitted (also referred to as being executed) to another BC in conjunction with a transaction in one BC, a plurality of processing nodes of the one BC that submits the remote transaction is made into a redundant configuration. According to this redundant configuration, remote transaction submission is reliably carried out even when a communication failure or the like occurs, and operational continuity of the control system is ensured.

Then, the processing nodes according to the embodiment determine a priority order of the remote transaction submission on the basis of information regarding transaction data to serve as a basis for the remote transaction. This priority order is autonomously determined by each of the processing nodes on the basis of the transaction data. As a result, the plurality of processing nodes of the one BC efficiently and reliably submits the remote transaction while removing the need for special processing such as access to a synchronous database as exclusive control for suppressing remote transaction conflict between the respective processing nodes even in the redundant configuration.

### (Embodiment)

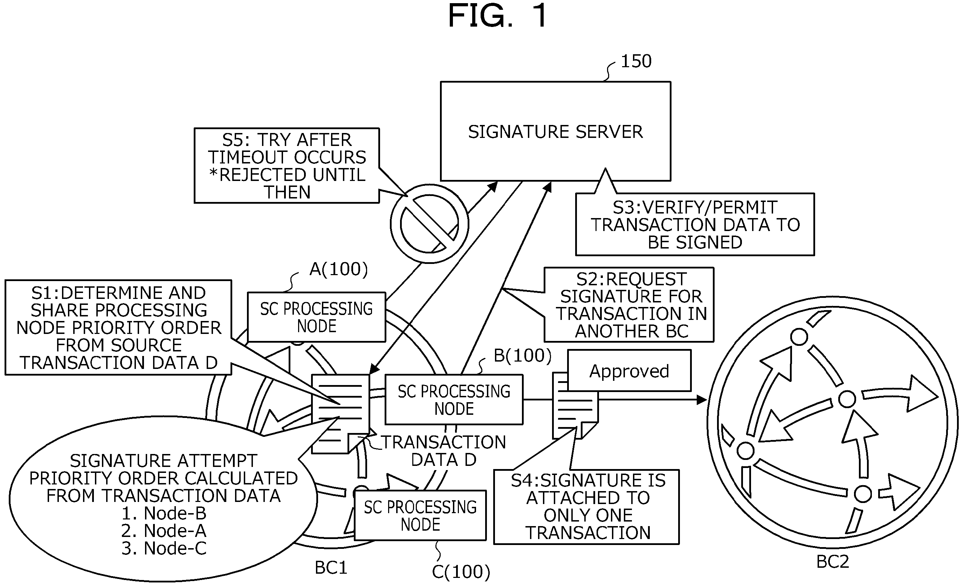

FIG. 1 is an explanatory diagram of exemplary remote transaction control according to an embodiment. A control system according to the embodiment includes a first blockchain BC1, a plurality of processing nodes A to C (100) arranged in BC1, a second blockchain BC2, and a signature server 150. An information processing apparatus refers to each of the processing nodes A to C (100) and the signature server 150 illustrated in FIG. 1.

The first BC1 is a blockchain that manages a first distributed ledger (e.g., local ledger), and the second BC2 is a blockchain that manages a second distributed ledger (e.g., remote ledger). When each of the processing nodes A to C (100) detects that transaction data D related to a first transaction in BC1 stored therein is recorded, it controls whether or not to transmit a second transaction to be carried out after the first transaction to BC2 on the basis of the transaction data D.

The control system illustrated in FIG. 1 may be applied to, for example, various control systems that cause BC1 and BC2 to cooperate and execute a remote transaction from BC1 to BC2, such as securities/credit management or the like. In the control system illustrated in FIG. 1, each of the plurality of processing nodes A to C (100) arranged in BC1 may be configured by a server. A smart contract (SC) to be described later is arranged between BC1 and BC2.

Each of the processing nodes A to C (100) carries out a remote transaction in which the first transaction in BC1 and the second transaction in BC2 are linked under the control of the SC. The SC may be arranged in the servers that configure the individual processing nodes A to C (100), or may be configured as a separate server.

For example, BC1 manages the first distributed ledger for asset management, and BC2 manages the second distributed ledger for payment token management. In this case, the processing nodes A to C (100) of BC1 carry out a remote transaction (submission of payment token) as the second transaction for BC2 on the basis of the transaction data D of asset transfer as the first transaction via the SC. This makes it possible to carry out the asset transfer (token payout) from the first distributed ledger of BC1 to the second distributed ledger of BC2.

In the embodiment, the plurality of processing nodes A to C (100) is arranged in BC1. With the plurality of processing nodes A to C (100) arranged in BC1, each of the processing nodes A to C (100) is made to have a redundant configuration capable of executing a remote transaction. With this redundant configuration, even in a case where a trouble such as communication, failure, or the like occurs in one of the processing nodes A to C (100) that carries out a remote transaction, the remote transaction may be carried out using other processing nodes A to C (100), and the operational continuity of the control system may be ensured.

When the signature server 150 receives a signing request for executing the second transaction (remote transaction) from one of the individual processing nodes A to C (100) having the redundant configuration, it first verifies the received transaction data D. The signature server 150 attaches a signature (electronic signature) to the permitted (approved) transaction data D as a result of the verification, and responds to the one of the processing nodes A to C (100) that has issued the signing request.

For example, in a case where the contents of the transaction data D for which the signing request has been issued are correct, the signature server 150 returns the transaction data D to which a signature for permitting transaction execution is attached and a processing success status of the processing, and in a case where the contents of the transaction data D (e.g., transfer amount, number of same transactions, date and time, etc.) contains an error or deficiency, it returns an error status and does not permit the signature. When the one of the processing nodes A to C (100) that has issued the signing request receives the response of the processing success status from the signature server 150, it carries out the remote transaction directed to BC2 using the transaction data D to which the signature is attached.

Then, each of the processing nodes A to C (100) having the redundant configuration autonomously determines a priority order of the processing nodes A to C (100) for taking charge of the remote transaction on the basis of the transaction data D. Hereinafter, the determination of the priority order of the remote transaction to the remote transaction execution in the processing nodes A to C (100) will be described in the order of processing.
(1) First, the transaction data D is assumed to be recorded in the first distributed ledger by each of the processing nodes A to C (100) of BC1. For example, each of the individual processing nodes A to C (100) receives the transaction data D to serve as a basis for a remote transaction through P2P communication or the like with a user terminal (not illustrated). The transaction data D, which will be detailed later, includes items such as a transaction identifier (ID), a transaction type, a transaction amount (asset transfer amount, etc.), a transfer source, a transfer destination, and the like.

Then, each of the processing nodes A to C (100) determines one of the processing nodes A to C (100) to carry out remote processing with the received transaction data D as an impetus (trigger). Here, each of the individual processing nodes A to C (100) performs a predetermined operation on the same transaction data D having been received, thereby determining an execution order (priority order) of the remote transaction process by the individual processing nodes A to C (100) (step S1).

As the predetermined operation described above, for example, each of the processing nodes A to C (100) performs the same function operation, such as the same hash value operation, on the contents of the same transaction data D (e.g., all data). As a result, of the individual processing nodes A to C (100), the own processing node A (100) is enabled to determine (recognize) the execution order (priority order) of the remote transaction process by the own processing node A (100).

Furthermore, the own processing node A (100) is enabled to determine the execution order (priority order) of the remote transaction process by each of the other processing nodes B and C (100). Similarly, the processing nodes B and C (100) are also enabled to determine the priority order of the respective processing nodes A to C (100) by performing the function operation in a similar manner.

As another example of the predetermined operation described above, for example, each of the processing nodes A to C (100) may determine the priority order in the order starting from the earliest time stamp given at the time of verifying the first transaction for the transaction data D (details will be described later).

In this manner, each of the processing nodes A to C (100) determines the priority order of the processing order for executing the remote processing on the basis of the transaction data D. Furthermore, each of the processing nodes A to C (100) is capable of mutually sharing the priority order determined by each of them.

Here, as illustrated in FIG. 1, it is assumed that the processing node B (100) is the first in the priority order, the processing node A (100) is the second, and the processing node C (100) is the last. Note that, since the signature verification by the signature server 150 has not yet been executed, the priority order determined at this stage corresponds to the execution order (attempt order) of the signing requests from the respective processing nodes A to C (100) to the signature server 150.

(2) Then, among the individual processing nodes A to C (100), the processing node B (100) with the highest (first) priority order carries out the signing request with respect to the remote transaction in BC2 to the signature server 150 (step S2). The signing request includes the transaction data D.

(3) The signature server 150 verifies whether the transaction data D is to be signed in response to the signing request from the processing node B (100) from which the signing request has been received (step S3). Here, the same function operation, such as the same hash value operation, for the contents of the transaction data D (data string), which is executed in the respective processing nodes A to C (100), may also be performed in the signature server 150. In this case, the priority order of the respective processing nodes A to C (100) is calculated also in the signature server 150.

Then, the signature server 150 verifies attachment of a signature to the signing request from the processing node B (100) from which the signing request has been received on the basis of the calculated priority order. Here, since the processing node B (100) is the highest (first) in the calculated priority order of the processing nodes 100, the signature server 150 verifies whether the processing node 100 that has issued the signing request first is the processing node B (100). Then, in a case where the processing node 100 that has issued the signing request first is the processing node B (100), the signature server 150 attaches a signature to the processing node B (100).

The signature server 150 returns the transaction data D to which the signature information is attached to the processing node B (100). Then, the signature server 150 rejects the signing requests from the processing nodes A and C (100), which are second or later in the priority order, even if the signing requests are issued.

(4) As a result, a signature is attached to the transaction data D of one processing node B (100), which is the highest in the priority order at that time among the individual processing nodes A to C (100) in BC1 (step S4). Then, in BC1, one processing node B (100) among the plurality of processing nodes A to C (100) executes the remote transaction using the transaction data D with respect to BC2.

(5) Here, it is assumed that the processing node B (100) fails to submit the remote transaction. In this case, after the processing timeout of the remote transaction, the next and subsequent processing nodes A and C (100) issue a signing request to the signature server 150 in accordance with the previously calculated priority order (step S5). The processing timeout occurs when, for example, the processing node B (100) fails to receive a transaction result from the side of BC2 due to a communication failure or the like between the processing node B (100) that has submitted the remote transaction and BC2.

For example, the processing node B (100) starts a timer for a predetermined time at the time of submitting the remote transaction, and when the response from BC2 times out, it records the failure of the remote transaction in the first distributed ledger (local ledger) of BC1. Other processing nodes A and C (100) are enabled to determine an execution status of the remote transaction by periodically referring to the local ledger, and are enabled to determine whether or not the own processing nodes A and C (100) are to execute the remote transaction in accordance with the priority order.

As a result, after the time for the processing timeout has elapsed for the unprocessed transaction data D, the next and subsequent processing nodes A and C (100) are enabled to attempt to the signing request to the signature server 150 in accordance with the priority order. Then, the signature server 150 verifies the signature issuance for the next and subsequent processing nodes A and C (100), and permits the signature issuance to one processing node A (100).

As a result, even in a case where the transaction in the processing node B (100) that submits the remote transaction may not be completed (e.g., in a case where the transaction stops in the middle of the processing), one of the processing nodes A to C (100) with the lower priority order is enabled to sequentially take over and execute the remote transaction.

Note that, during the period from the determination of the priority order of a certain processing node B (100) among the individual processing nodes A to C (100) until the processing timeout occurs after the remote transaction is carried out, the signature server 150 rejects signing requests from the other processing nodes A and C (100). For example, even in a case where the other processing nodes A and C (100) transmit a signing request to the signature server 150 at wrong timing, the signature server 150 rejects issuance of a signature to those other processing nodes A and C (100) in accordance with the priority order calculated by itself.

In the control system according to the embodiment, when the plurality of processing nodes A to C (100) that operates in a cluster-type redundant configuration submits a remote transaction needed for cooperation between BC1 and BC2, access to the signature server 150 that approves (permits) submission of the remote transaction is subject to exclusive control autonomously.

This exclusive control may be implemented by the priority order uniquely determined by information included in the transaction data D of BC1, which is the source of the cooperation from which any of the individual processing nodes A to C (100) submits the remote transaction. As a result, even in a case where the plurality of processing nodes A to C (100) of BC1 is made to have a redundant configuration, only one of the processing nodes A to C (100) is enabled to submit the remote transaction from the respective processing nodes A to C (100) to BC2 in accordance with the priority order.

Furthermore, the processing for the priority order determination may be independently determined not only by each of the processing nodes A to C (100) but also by the signature server 150. In this case, the signing request may be verified in order from the higher processing nodes A to C (100) on the basis of the matching between the priority order determined by the signature server 150 and the priority order determined by each of the processing nodes A to C (100). In other words, the priority order of the signing request may be double-checked by each of the processing nodes A to C (100) and the signature server 150. As a result, even in a case where the plurality of processing nodes A to C (100) of BC1 is made to have a redundant configuration, only one of the processing nodes A to C (100) is enabled to submit the remote transaction from the respective processing nodes A to C (100) to BC2 in accordance with the priority order.

Furthermore, it is assumed that a communication failure or the like occurs in the processing node B (100) to which the signature is attached and the remote transaction by the processing node B (100) that has submitted the remote transaction fails without being complete. In this case, after the time for the processing timeout has elapsed, the next and subsequent processing nodes A and C (100) issue a signing request to the signature server 150 in accordance with the priority order so that the incomplete remote transaction may be continued. Furthermore, the remote transaction may be carried out only once from one of the processing nodes A to C (100) at all times with certainty.

As described above, the processing nodes A to C (100) in BC1 "submit" a transaction, and when the "submitted" transaction is approved by the signature server 150, "execute" the remote transaction with respect to BC2. Then, according to the embodiment, the plurality of processing nodes A to C (100) is arranged in BC1 in the redundant configuration, whereby the remote transaction with respect to BC2 may be reliably carried out from any of the plurality of processing nodes A to C (100). Furthermore, the priority order is autonomously determined by each of the processing nodes A to C (100) on the basis of the shared transaction data D, whereby the need for special exclusive control in the redundant configuration may be removed. Furthermore, since the priority order is determined on the basis of the data contents of the transaction data D, the priority order differs for each new transaction data D, and the highest-order processing node A, B, or C (100) is determined. This makes it possible to implement horizontal processing scale-up that may evenly distribute the processing load of remote transaction submission across the plurality of processing nodes A to C (100).

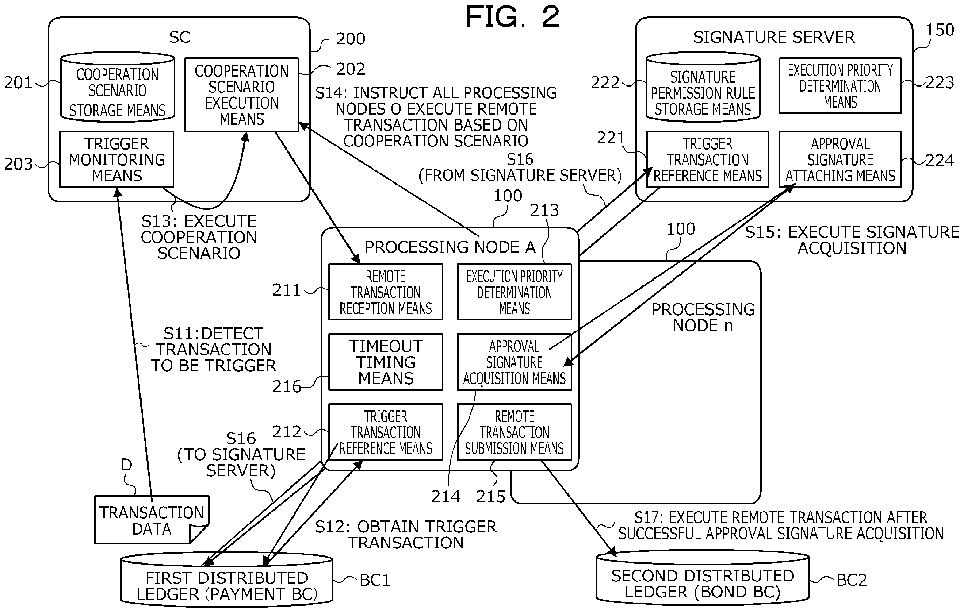

FIG. 2 is a block diagram for explaining each function of the control system according to the embodiment. In the control system illustrated in FIG. 2, the blockchain BC2 (bond BC) that manages a second distributed ledger of digital bonds is linked to the blockchain BC1 (payment BC) that manages a first distributed ledger of payment tokens.

Then, ownership of a digital bond X owned by a user U1 is transferred to a user U2 on the basis of devolution of the payment tokens in Y units. Although the order of transactions carried out in the bond BC (BC2) and the payment BC (BC1) is not important, in the embodiment, it is assumed that the ownership transfer in the bond BC (BC2) is executed and controlled after the devolution of the payment tokens is complete in the payment BC (BC1). The execution control procedure for this ownership transfer is set in a cooperation scenario.

A smart contract (SC) 200 operating in the processing node group 100 included in the payment BC (BC1) executes and controls the cooperative operation between BC1 and BC2 in accordance with the cooperation scenario described above. As illustrated in FIG. 2, the SC 200 may be configured in such a manner that one SC 200 is arranged in the control system to control each processing node 100 and the SC 200 may be included in each processing node 100.

When a bond transaction between users (e.g., assumed to be U1 and U2) is instructed, the SC 200 submits a transfer transaction of payment tokens for a specified transaction unit from the account of the buyer user U2 to the account of the seller user U1. After confirming the transaction submission, the SC 200 executes, as a remote transaction, the right transfer from the seller user U1 to the buyer user U2 in the bond BC (BC2).

The SC 200 has respective functions of a cooperation scenario storage means 201, a cooperation scenario execution means 202, and a trigger monitoring means 203. The cooperation scenario execution means 202 and the trigger monitoring means 203 function as a control unit of the SC 200.

The cooperation scenario storage means 201 stores, for each generation of the transaction data D, the execution control procedure (cooperation scenario) from when the devolution of the payment tokens in the payment BC (BC1) is complete until when the ownership is transferred in the bond BC (BC2). The trigger monitoring means 203 detects generation of the transaction data D to serve as a basis for a remote transaction. The cooperation scenario execution means 202 instructs the plurality of processing nodes 100 in BC1 to execute the remote transaction according to the transaction contents of the transaction data D detected by the trigger monitoring means 203.

The plurality of (n) processing nodes 100 is arranged in BC1, and each of them has similar functions. Taking the processing node A (100) as an example, it has respective functions of a remote transaction reception means 211, a trigger transaction reference means 212, an execution priority determination means 213, an approval signature acquisition means 214, a remote transaction submission means 215, and a timeout timing means 216. The following functions of those remote transaction reception means 211 to the timeout timing means 216 function as a control unit of the processing node A (100).

When the remote transaction reception means 211 receives an instruction of remote transaction execution from the SC 200, it activates each functional unit in the processing node A (100). The trigger transaction reference means 212 obtains the transaction data D from the first distributed ledger of BC1 when the transaction data D to server as a basis for the remote transaction is generated.

The execution priority determination means 213 determines a priority order of remote transaction submission for each of the plurality of (n) processing nodes 100 in BC1 on the basis of predetermined arithmetic processing using the data contents of the obtained transaction data D. This priority order indicates, more precisely, the priority order of signing requests to the signature server 150.

The execution priority determination means 213 is provided in each of the processing nodes 100, and performs the same operation on the contents of the same transaction data D (e.g., all data) such as a function operation using the same hash value. According to this determination, the execution priority determination means 213 recognizes the priority order of its own processing node A (100) among all the plurality of processing nodes n (100).

The approval signature acquisition means 214 transmits the transaction data D to the signature server 150 when its own processing node A (100) is the highest in the priority order at present, and requests a signature (electronic signature) needed to execute the remote transaction. The approval signature acquisition means 214 obtains the transaction data D to which the signature is given from the signature server 150 at the time of approval by the signature server 150.

When the signature is obtained from the signature server 150, the remote transaction submission means 215 uses the signature to execute the remote transaction with respect to BC2 on the basis of the transaction contents of the transaction data D. The timeout timing means 216 performs timer timing that starts from the remote transaction execution by its own processing node A (100), and monitors a predetermined timeout set corresponding to the period until the remote transaction process is complete.

The signature server 150 has respective functions of a trigger transaction reference means 221, a signature permission rule storage means 222, an execution priority determination means 223, and an approval signature attaching means 224. The respective functions of the trigger transaction reference means 221, the execution priority determination means 223, and the approval signature attaching means 224 function as a control unit of the signature server 150.

The trigger transaction reference means 221 activates each functional unit in the signature server 150 on the basis of acquisition of the transaction data D transmitted by the processing node A (100) that has issued the signing request. The signature permission rule storage means 222 stores, for each transaction data D, information regarding a permission rule including a priority order of signature attachment to the respective processing nodes 100 that have issued the signing request. The permission rule includes information regarding the arithmetic processing same as the predetermined arithmetic processing using the data contents of the transaction data D, which is executed by the processing node 100 described above.

The execution priority determination means 223 determines the priority order of submission (execution) of the remote transaction for the plurality of processing nodes 100 in BC1 on the basis of the permission rule stored in the signature permission rule storage means 222. The execution priority determination means 223 performs the operation same as that of the execution priority determination means 213 provided in each of the processing nodes 100. In other words, the execution priority determination means 223 performs the same hash value operation on the contents of the same transaction data D (e.g., all data). As a result, the priority order calculated by the signature server 150 is the same as the priority order of the submission (execution) of the remote transaction determined by each of the plurality of processing nodes 100 arranged in BC1.

The approval signature attaching means 224 approves attachment of the signature (electronic signature) needed for the execution of the remote transaction based on the transaction data D to one processing node 100 that has issued the signing request, which is the highest in the priority order at present, attaches the signature to the transaction data D, and transmits it to the corresponding processing node 100. Here, even when the signing request is issued from the processing nodes 100 having the second highest or lower priority order at present, the approval signature attaching means 224 does not attach the signature to those processing nodes 100.

The overall process in the control system illustrated in FIG. 2 is executed with the following procedures (1) to (5). In the following descriptions, n processing nodes 100 in BC1 generate block data on the basis of the generation of the transaction data D.

### (1) Transaction Agreement

In BC1, signed transaction data D for transferring payment tokens in Y units from the account of the user U2 who is a bond buyer to the account of the user U1 who is a bond seller is submitted. As a result, the SC 200 detects generation of a transaction with the generation of the transaction data D in BC1 as a trigger (step S11). Furthermore, each processing node 100 detects the generation of the transaction with the generation of the transaction data D in BC1 as a trigger (step S12). Each processing node 100 verifies validity of the transaction indicated by the transaction data D, and then takes in the transaction data D as a part of the block data.

### (2) Priority Order Determination

The block data incorporated by each processing node 100 in step S12 described above is monitored by the SC 200 at all times. When the SC 200 detects the generation of the transaction data D for the transfer of the payment tokens, it executes the stored cooperation scenario (step S13). Then, the SC 200 recognizes that it is a part of a series of bond trading transactions between the user U1 and the user U2 on the basis of the execution of the cooperation scenario. Then, as a next step in the series of transactions, the SC 200 determines that a remote transaction for transferring the ownership of the bond owned by the user U1 to the user U2 is needed in BC1, and instructs each processing node 100 to execute the remote transaction in accordance with the cooperation scenario (step S14).

Before executing the remote transaction, each processing node 100 executes operation (function operation) for determining a priority order among the individual processing nodes 100 using the transaction data D detected in step S12 as an input. According to this operation execution, for example, "1 st: processing node A, 2nd: processing node B, and 3rd: processing node C" is calculated as a priority order for the transaction execution. Other processing nodes B and C other than the processing node A that is the first in the calculated priority order enter a standby state until the remote transaction execution by the processing node A times out.

### (3) Signing Request Transmission

For example, the processing node A (100), which is the first in the priority order, issues a signing request to the signature server 150 for a signature needed to transfer the ownership of the bond X owned by the seller user U1 managed in BC1 to the buyer user U2 (step S15). The processing node A (100) transmits the transaction data D to the signature server 150 along with the signing request.

### (4) Signature Permission

The signature server 150 obtains the transaction data D from the processing node A (100) that has issued the signing request (step S16). Then, the signature server 150 executes the function operation for determining the priority order of the respective processing nodes A to C (100) using the transaction data D as an input. Then, the signature server 150 determines whether or not the signing request from the processing node A (100) that has issued the signing request may be approved (permitted) on the basis of the calculated priority order. In a case of being approvable, it attaches an electronic signature to the received transaction data D, and returns the signed transaction data to the processing node A (100).

The processing node A (100) that has received the signed transaction data D executes the remote transaction with respect to BC2 using the received transaction data D (step S17). After being verified by each participating processing node in BC2, the transaction data D for which the remote transaction validity is confirmed is incorporated into the block data, and the series of processes of the remote transaction described above is complete in a normal manner.

Meanwhile, as for the signing request, it is assumed that the processing node B (100) having the second highest priority order erroneously issues a signing request to the signature server 150 when the processing node A (100) having the highest priority order issues a signing request. In this case, the signature server 150 determines that the processing node B (100) does not have the highest priority order at present, rejects the signing request from the processing node B (100), and returns an error response to the processing node B (100).

### (5) Occurrence of Timeout

It is assumed that a failure occurs in the processing node A (100) that has received the signed transaction data D. Here, it is assumed that a timeout occurs in the processing node A (100) that has executed the remote transaction and the ownership transfer of the bond X from U1 to U2 fails to be confirmed in BC2. In this case, the processing node B (100) having the second highest priority order, which has been in the standby state, executes the process of the signing request (step S15) and subsequent steps. Furthermore, in a case where a timeout occurs in the remote transaction execution by the processing node B (100) having the second highest priority order, the processing node C (100) having the third highest priority order executes the process of the signing request (step S15) and subsequent steps.

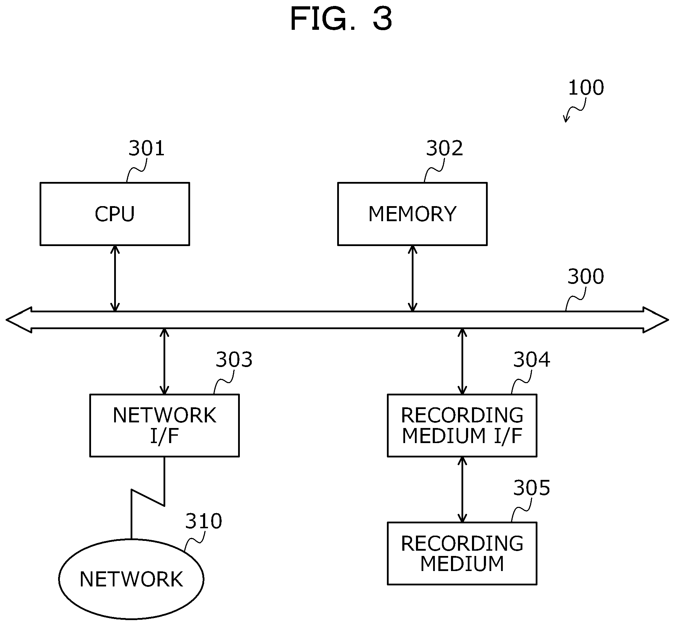

FIG. 3 is a diagram illustrating an exemplary hardware configuration of the information processing apparatus according to the embodiment. A server or the like including the hardware illustrated in FIG. 3 may be used as each of the processing nodes A to C (100) described above.

For example, the processing node A (100) includes a central processing unit (CPU) 301, a memory 302, a network interface (IF) 303, a recording medium IF 304, and a recording medium 305. A bus 300 connects the individual units.

The CPU 301 is an arithmetic processing unit that functions as a control unit that takes overall control of the processing node A (100). The memory 302 includes a nonvolatile memory and a volatile memory. The nonvolatile memory is, for example, a read only memory (ROM) that stores a program of the CPU 301. The volatile memory is, for example, a dynamic random access memory (DRAM), a static random access memory (SRAM), or the like used as a work area of the CPU 301.

The network IF 303 is an interface communicably connected to a network 310 such as a local area network (LAN), a wide area network (WAN), the Internet, or the like. Through the network IF 303, the processing node A (100) is communicably connected to other processing nodes B and C (100), the SC 200, the signature server 150, a user terminal, and the like.

The recording medium IF 304 is an interface for reading and writing information processed by the CPU 301 from and to the recording medium 305. The recording medium 305 is a recording device that assists the memory 302. As the recording medium 305, for example, a hard disk drive (HDD), a solid state drive (SSD), a universal serial bus (USB) flash drive, or the like may be used.

With a program recorded in the memory 302 or the recording medium 305 executed by the CPU 301, each function (control unit) of the respective processing nodes A to C (100) illustrated in FIG. 2 may be implemented.

The hardware configuration illustrated in FIG. 3 may also be applied to the SC 200 and the signature server 150 illustrated in FIG. 2, and user terminals (e.g., personal computer (PC), smartphone, etc.), and the control system according to the embodiment may be implemented by using a general-purpose hardware configuration. Furthermore, using the hardware configuration illustrated in FIG. 3, one server may have the functions of the respective processing nodes A to C (100) and the SC 200.

The cooperation scenario storage means 201 of the SC 200 and the signature permission rule storage means 222 of the signature server 150 may be configured by using the memory 302 or the recording medium 305, for example. Furthermore, the execution priority determination means 213 of each of the processing nodes A to C (100) and the execution priority determination means 223 of the signature server 150 store and retain arithmetic expressions for calculating a priority order in the memory 302 and the recording medium 305.

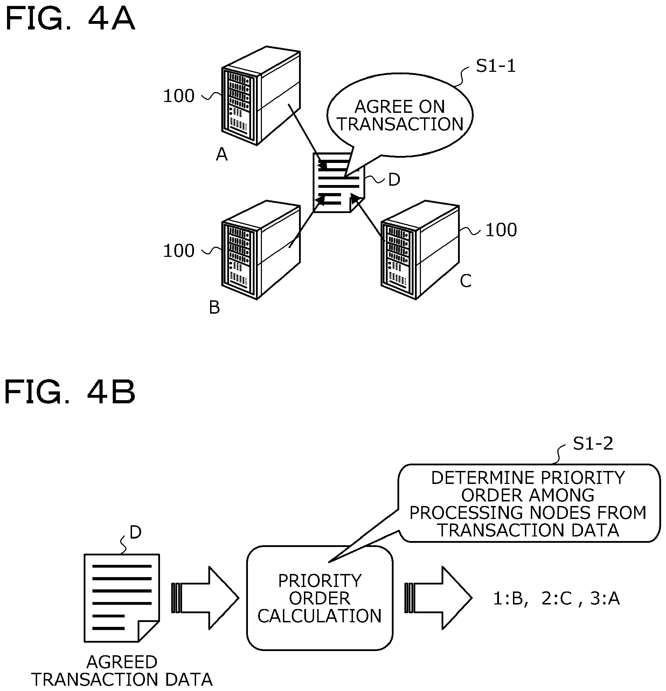

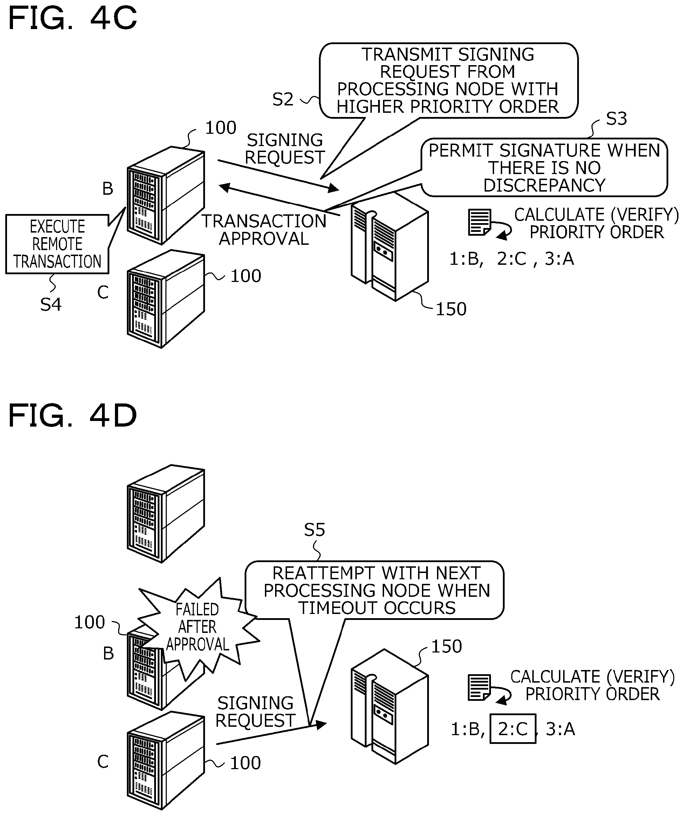

FIG. 4 (i.e., FIGs. 4A to 4D) is a diagram for explaining a remote transaction execution procedure according to the embodiment. An exemplary execution procedure from the generation of the transaction data D to the remote transaction execution in the case where the plurality of processing nodes A to C (100) is arranged in the redundant configuration in BC1 will be described. The step numbers illustrated in FIG.1 are used for step numbers of respective procedures.
(a) First, each of the processing nodes A to C (100) receives the transaction data D generated by a transaction made by a user. Each of the processing nodes A to C (100) agrees on the transaction indicated by the transaction data D (step S1-1).
(b) Each of the processing nodes A to C (100) determines a priority order among the processing nodes A to C (100) by a predetermined operation (function operation) using the agreed transaction data D (step S1-2). According to this operation execution, for example, a priority order "1 st: processing node B, 2nd: processing node C, and 3rd: processing node A" is calculated as a priority order for the transaction execution.
(c) Next, a signing request to the signature server 150 is issued from the processing node A, B, or C (100) having a higher priority order. In the example of FIG. 4, the processing node B (100), which is the first in the priority order, issues a signing request to the signature server 150 for a signature needed for remote transaction execution (step S2). Here, for the transaction data D received from the processing node B (100) based on the signing request, the signature server 150 determines a priority order among the processing nodes A to C (100) by an operation (function operation) similar to that of the processing nodes A to C (100).

Then, the signature server 150 permits the signature for the processing node B (100) if there is no discrepancy in the priority order of the processing node B (100) that has issued the signing request (step S3). In the example of FIG. 4, the signature server 150 calculates the priority order of "1st: processing node B, 2nd: processing node C, and 3rd: processing node A". Therefore, the signing request from the processing node B (100), which is the first in the priority order at present, is permitted (step S3). Then, transaction approval is returned to the processing node B (100).

At this point, a signature is attached to the transaction data D of one processing node B (100), which is the first in the priority order among the individual processing nodes A to C (100) in BC1 (step S4). The processing node B (100) that has received the signed transaction data D is enabled to execute the remote transaction with respect to BC2 using the received transaction data D.

Here, the signature server 150 causes the other processing nodes A and C (100) other than the processing node B (100) that is the first in the calculated priority order to enter a standby state until the remote transaction execution by the processing node B (100) times out. Accordingly, it is assumed that the processing node A (100) erroneously issues a signing request to the signature server 150 at the time of the signing request of the first-ranked processing node B (100). In this case, the signature server 150 rejects the signing request from the processing node A (100), which has a lower priority order calculated, and returns an error response to the processing node A (100).
(d) Thereafter, it is assumed that a failure occurs in the processing node B (100) after reception of the signed transaction data D. In this case, a timeout occurs in the processing node B (100), which is to execute the remote transaction, and the processing node B (100) fails to complete the remote transaction with respect to BC2. Due to the occurrence of the timeout in the processing node B (100), which is the first in the priority order, the next processing node C (100) (second in the priority order), which has been in the standby state, issues a signing request to the signature server 150 (step S5). Here, the signature server 150 permits the signature for the processing node C (100) if there is no discrepancy in the priority order of the processing node C (100) that has issued the signing request.

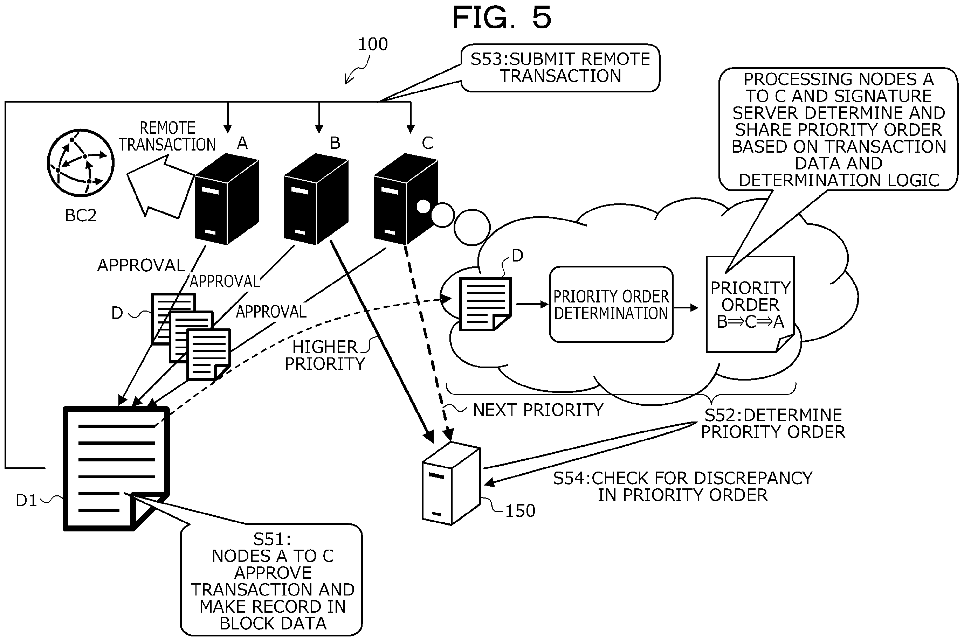

FIG. 5 is a diagram for explaining autonomous exclusive control of each processing node according to the embodiment. An example in which one processing node B (100) executes a remote transaction by each of the plurality of processing nodes A to C (100) autonomously determining a priority order will be described with reference to FIG. 5.

When each of the processing nodes A to C (100) arranged in a redundant configuration in BC1 approves the generated transaction data D, it records the information that the transaction data D is approved by each of the processing nodes A to C (100) in block data D1 (step S51). The block data D1 is recorded in the local ledger managed by BC1.

Next, each of the processing nodes A to C (100) executes priority order determination logic using the approved transaction data D included in the block data D1 to determine the priority order (step S52). In this determination logic, each of the processing nodes A to C (100) performs the same predetermined operation (function operation) on the transaction data D. As a result, each of the processing nodes A to C (100) determines the priority order of its own processing node and the other processing nodes.

For example, the processing nodes A to C (100) perform the same hash value operation on the transaction data D, thereby determining the priority order of its own processing node and the priority order of the other processing nodes for each of the remote transaction processes of the respective processing nodes A to C (100). This priority order corresponds to the execution order of the remote transaction by the respective processing nodes A to C (100), and more precisely, it indicates the execution order of the signing requests to the signature server 150 from the respective processing nodes A to C (100). Furthermore, this enables the respective processing nodes A to C (100) to autonomously share the priority order (remote transaction execution order) on the basis of the transaction data D without performing mutual communication or the like.

Then, the processing node B (100) having the highest priority order issues requests the signature server 150 to sign the transaction data D, and submits (executes) a remote transaction with respect to BC2 after approval of the signature server 150 (step S53). Here, the signature server 150 determines whether or not the signing request is from the processing node 100 having a higher priority order (checks for discrepancy in the priority order) on the basis of the priority order calculated by itself (step S54). Then, as described above, only the signing request from one of the processing nodes A to C (100) having the highest priority order at present is approved.

According to the embodiment, each of the processing nodes A to C (100) performs the same operation on the transaction data D so that the priority order may be shared among the respective processing nodes A to C (100), and one of the processing nodes A to C (100) executes the remote transaction in accordance with the priority order. With the plurality of processing nodes A to C (100) arranged in BC1 in this manner, it becomes possible to make the remote transaction submission from BC1 to BC2 redundant, and to reliably execute the remote transaction.

Furthermore, according to the priority order determination, each of the processing nodes A to C (100) is enabled to suppress multiple submission of remote transactions by the respective processing nodes A to C (100) even in a redundant configuration. In addition, a priority order of the respective processing nodes A to C (100) is also calculated on the side of the signature server 150 according to the operation same as that of the respective processing nodes A to C (100). As a result, the signing request from each of the processing nodes A to C (100) may be double-checked by the signature server 150, which may suppress multiple submission of remote transactions.

Moreover, it becomes possible to easily distribute the processing load on the respective processing nodes A to C (100) in BC1. In this respect, according to the embodiment, cooperation using communication between the processing nodes A to C (100) is not needed to determine the priority order, and each of the processing nodes A to C (100) autonomously determines the priority order using the transaction data D, whereby the exclusive control may be implemented with a simple configuration.

Note that, in the redundant configuration, a system configuration in which the priority order is assigned to the respective processing nodes A to C in advance is conceivable. However, in this case, the predetermined processing node A is fixed at the highest priority order at all times, and the processing load is placed only on the processing node A, whereby distributed processing among the processing nodes A to C in the redundant configuration may not be achieved. In this respect, according to the embodiment, the processing node A (100) on standby may also be used as a resource in accordance with the priority order as in the above-described processing when a timeout occurs, whereby the plurality of processing nodes A to C (100) may be effectively used.

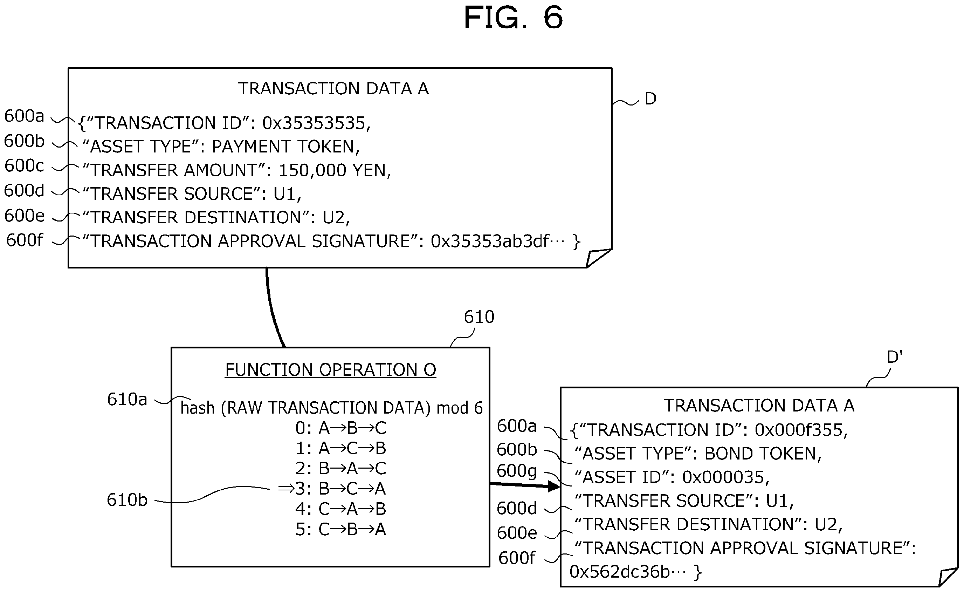

FIG. 6 is a diagram for explaining the transaction data and the priority order determination according to the embodiment. Exemplary data of the transaction data D described above, the priority order determination of the respective processing nodes A to C (100) by a predetermined function operation performed on the transaction data D, and the like will be described.

The transaction data D generated in BC1 includes, for example, transaction identifier (ID) 600a, an asset type 600b, a transfer amount 600c, a transfer source 600d, a transfer destination 600e, and a transaction approval signature 600f. The transaction ID 600a is an identifier that is generated when the transaction data D is generated and identifies transaction contents. The asset type 600b indicates the transaction contents (payment tokens) of the user U1 in BC1 illustrated in FIG. 2. The transfer amount 600c indicates an amount (transfer amount) of the payment tokens of the digital bond. The transfer source 600d indicates the user U1 who owns the digital bond, and the transfer destination 600e indicates U2 who is the transferee of the digital bond. The transaction approval signature 600f is an electronic signature assigned by the signature server 150 on the basis of a signing request for the transaction data D.

Each of the processing nodes A to C (100) performs the same function operation O on the received transaction data D. For example, a hash operation "hash (raw transaction data) mod 6" (reference sign: 61 0a) is performed. The "raw transaction data" is a data string of substantial data contents of the transaction data D, which is from the transaction ID (identifier) 600a to the transfer destination 600e, for example. It is assumed that each of the processing nodes A to C (100) executes the hash operation 610a to obtain a processing result "3: B → C → A" (reference sign: 610b). This processing result corresponds to the priority order described above, and the top indicates the processing node B, the second indicates the processing node C, and the bottom indicates the processing node A. In the drawing, "0" to "5" indicate (identifiers of) combinations of the three processing nodes A to C (100). Note that the signature server 150 also performs the same function operation O on the transaction data D to calculate the priority order.

A reference sign D' indicates the transaction data contents at the time of the remote transaction. Since the transaction data D' at the time of the remote transaction is data to be used in BC2, the items are partially changed from the transaction data D described above generated in BC1. For example, the transaction data D' has the transaction ID (identifier) 600a, the transfer source 600d, and the transfer destination 600e, which are the same as the transaction data D, but does not have the transfer amount 600c. In addition, the asset type 600b indicates a bond token of the user U2 in BC2. The transaction approval signature 600f is an electronic signature assigned by the signature server 150 at the time of the remote transaction on the basis of a signing request for the transaction data D. Asset ID 600g indicates a bond ledger of the user U2.

As described above, the processing nodes A to C (100) and the signature server 150 are enabled to calculate the same priority order by performing a hash operation on one piece of transaction data D. With the priority order calculated in this manner used, it becomes possible to easily take the exclusive control when the plurality of processing nodes A to C (100) is arranged in BC1 in a redundant configuration. In other words, while each of the processing nodes A to C (100) in the control system issues a signing request in accordance with the priority order, the signature server 150 is also enabled to verify the signing request from each of the processing nodes A to C (100) on the basis of the priority order. The signature server 150 attaches a signature to only one of the processing nodes A to C (100) at all times in accordance with the priority order calculated by the predetermined operation based on the transaction data D.

Therefore, according to the embodiment, even in a case where each of the processing nodes A to C (100) is in a redundant configuration, it is possible to take the exclusive control with a simple configuration without taking special exclusive control such as communication among the respective processing nodes A to C (100) or the like. Additionally, it becomes possible to suppress multiple submission of the same transaction from the respective processing nodes A to C (100) in BC1, and to execute the remote transaction by one of the processing nodes A to C (100) at all times.

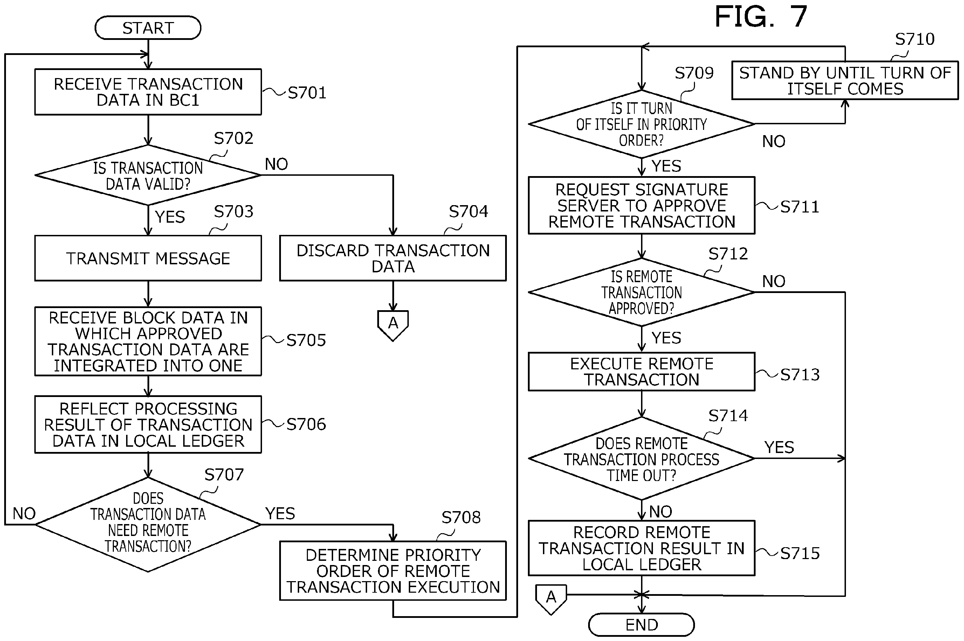

FIG. 7 is a flowchart illustrating an exemplary process to be performed by the processing node according to the embodiment. Each of the control units (CPU 301 in FIG. 3) of the processing nodes A to C (100) executes the following process in parallel each time the user transaction data D is received in BC1.

First, the control unit receives the user transaction data D in BC1 (step S701). The control unit of each of the processing nodes A to C (100) receives the transaction data D generated by the user terminal through P2P.

Next, the control unit determines whether the transaction data D is valid (step S702). For example, the control unit determines whether a normal transaction may be carried out with the contents of the individual items of the transaction data D illustrated in FIG. 6. As a result of the determination, the control unit proceeds to processing of step S703 if the transaction data D is valid (Yes in step S702), and proceeds to processing of step S704 if the transaction data D is not valid (No in step S702).

In step S703, the control unit transmits an approval message of the transaction based on the transaction data D to BC1 (step S703), and proceeds to processing of step S705. On the other hand, in step S704, the control unit discards the received transaction data D as the transaction based on the transaction data D is not valid (step S704), and terminates the process above.

The control unit of each of the processing nodes A to C (100) integrates the transaction data D for which the approval message has been transmitted into the block data D1 in BC1 (see FIG. 5). The block data D1 indicates that each of the processing nodes A to C (100) has agreed on the current transaction based on the transaction data D. In step S705, the control unit of each of the processing nodes A to C (100) receives the block data D1 in which the approved transaction data D are integrated into one from BC1 (step S705).

Next, the control unit reflects the processing result (indicating that the transaction is valid) of the transaction data D in the local ledger in BC1 (step S706). Next, the control unit determines whether the transaction data D needs a remote transaction (step S707). Here, the control unit determines whether an asset transfer to BC2 is set in the item of the transaction data D.

As a result of the determination, the control unit proceeds to processing of step S708 if the remote transaction is needed (Yes in step S707), and returns to the processing of step S701 if the remote transaction is not needed (No in step S707). For example, in a case where the user U1 of BC1 is set as the transfer source 600d and the user U2 of BC2 is set as the transfer destination 600e of the transaction data D illustrated in FIG. 6, the control unit determines that the remote transaction is needed.

In step S708, the control unit determines a priority order for executing the remote transaction (step S708). As described above, this priority order is calculated by the control unit of each of the processing nodes A to C (100) through a predetermined operation using the transaction data D.

Next, the control unit determines whether the turn of its own processing node 100 has come in the priority order (step S709). Here, the control unit recognizes the priority order of its own processing node 100 and other processing nodes 100 from the priority order calculated in step S708, and carries out the signing requests to the signature server 150 in accordance with the priority order.

As a result of the determination, if the turn of its own processing node 100 has come in the priority order (Yes in step S709), the control unit proceeds to processing of step S711. On the other hand, if it is not the priority order of its own processing node 100 (No in step S709), it stands by until the turn of its own processing node 100 comes (step S710), and returns to the processing of step S709. Here, the control unit determines whether or not it is the turn of its own processing node 100 on the basis of whether or not its own processing node 100 has the highest priority order at present.

More specifically, it determines whether or not the processing node 100 having the next priority order is itself when a timeout occurs after the processing node 100 higher than itself in the priority order executes the remote transaction. For example, the processing node 100 that has executed the remote transaction starts a timer for a predetermined time at the time of the remote transaction execution, and when the response from BC2 times out, it records the failure of the remote transaction in the first distributed ledger (local ledger) of BC1. Other processing nodes 100 are enabled to determine an execution status of the remote transaction by periodically referring to the local ledger, and are enabled to determine whether or not it is the turn of its own processing node 100 to execute the remote transaction in accordance with the priority order.

In step S711, the control unit requests the signature server 150 to approve the remote transaction execution (step S711). Specifically, the control unit issues a signing request to the signature server 150 for a signature needed for its own processing node 100 to execute the remote transaction. Next, the control unit determines whether or not the remote transaction is approved (step S712). Specifically, the control unit determines whether or not the signing request to the signature server 150 is approved.

As a result of the determination, if the remote transaction is approved (Yes in step S712), the control unit proceeds to processing of step S713. On the other hand, if the remote transaction is not approved (No in step S712), the control unit determines that it is not the turn of its own processing node 100 at present, and terminates the process above.

In step S713, the control unit executes the remote transaction with respect to BC2 on the basis of the transaction data D (step S713). Next, the control unit determines whether or not the remote transaction process times out (step S714). Here, if the remote transaction execution is complete before the timeout period elapses (No in step S714), the process proceeds to processing of step S715. On the other hand, if the processing is not complete after the remote transaction execution and the timeout period has elapsed, (Yes in step S714), the control unit records the information that the remote transaction is not complete (failure) in the distributed ledger of BC1, and terminates the process above.

In step S715, the control unit records the result of the executed remote transaction in the local ledger (step S715), and terminates the process above.

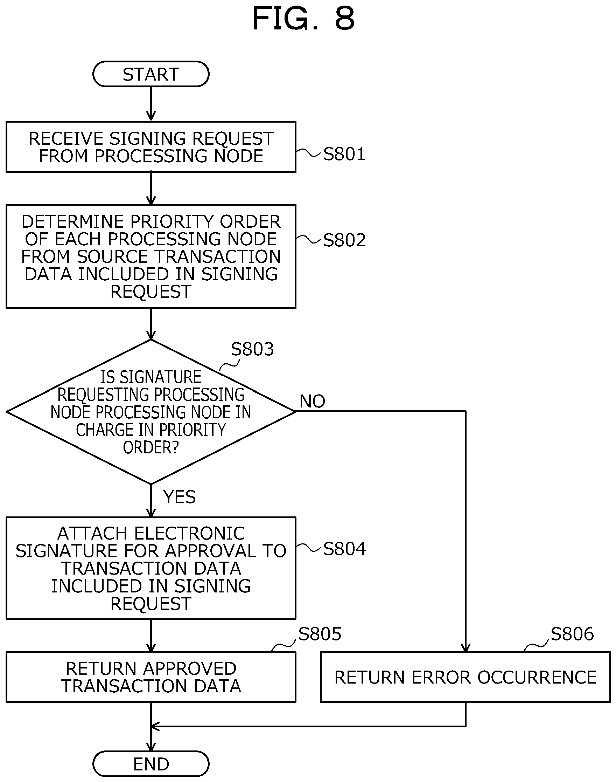

FIG. 8 is a flowchart illustrating an exemplary process to be performed by the signature server according to the embodiment. The control unit (CPU 301 in FIG. 3) of the signature server 150 executes the following process each time the signing request is received from the processing nodes A to C (100).

First, the control unit receives a signing request from the processing nodes A to C (100) (step S801). Each of the processing nodes A to C (100) normally receives the signing request from only one of the processing nodes 100 in accordance with the priority order.

Next, the control unit determines the priority order of the respective processing nodes A to C (100) from the transaction data D, which is the basis, included in the signing request (step S802). Since the control unit of the signature server 150 determines the priority order by the operation same as that of the control unit of each of the processing nodes A to C (100), the priority order determined on the side of the signature server 150 is the same as the priority order determined on the side of the respective processing nodes A to C (100).

Next, the control unit determines whether or not the processing node 100 that has issued the signing request is the processing node in charge in the priority order (step S803). Here, the control unit determines whether the processing node 100 that has issued the signing request has the highest priority order for executing the remote processing at present.

As a result of the determination, if the processing node 100 that has issued the signing request is the processing node in charge in the priority order (Yes in step S803), the control unit proceeds to processing of step S804. On the other hand, if the processing node 100 that has issued the signing request is not the processing node in charge in the priority order (No in step S803), the control unit proceeds to processing of step S806.

In step S804, the control unit attaches a signature (electronic signature) for approval to the transaction data D included in the signing request (step S804). Next, the control unit returns the approved transaction data D to the processing node 100 that has issued the signing request (step S805), and terminates the process above. In step S806, since the processing node 100 that has issued the signing request is not the processing node in charge in the priority order at present, error occurrence is returned to the processing node 100 that has issued the signing request (step S806), and the process is terminated. The processing node 100 that has received the approved transaction data D executes the remote transaction. On the other hand, the processing node 100 that has received the error response enters a remote transaction standby state based on the error response.

### (Other Methods of Priority Order Determination)

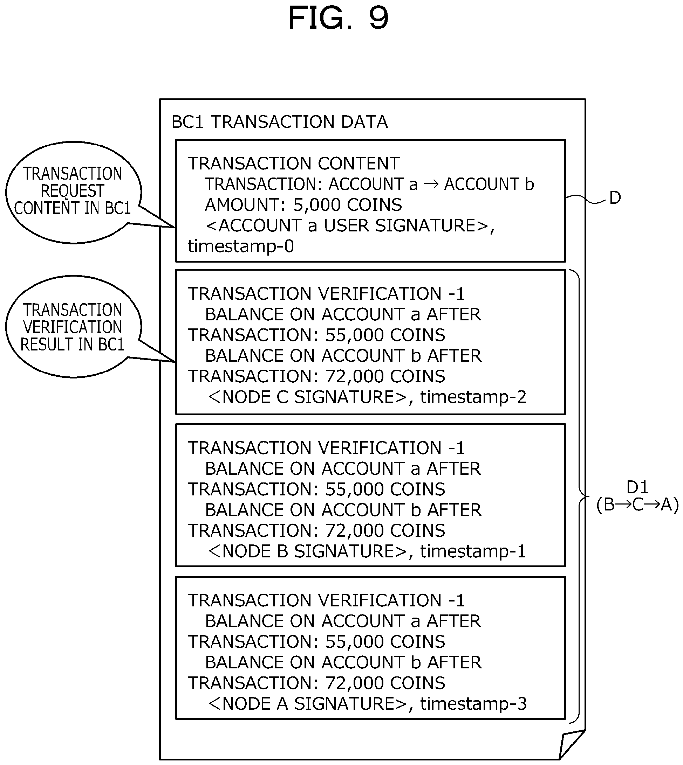

FIG. 9 is a diagram for explaining another method of determining the priority order for executing the remote transaction. According to the embodiment described above, each of the processing nodes A to C (100) determines a priority order by the same operation using the data contents of the transaction data D. Other methods of determining the priority order will be described.

Each of the processing nodes A to C (100) attaches a time stamp (time) to the transaction data D as a signature at the time of verifying the transaction of the transaction data D. In the example of FIG. 9, it is assumed that the transaction data D in which transaction contents ("amount" corresponding to the transfer amount in FIG. 6, "account a → account b" corresponding to the transfer source and transfer destination, etc.) for a remote transaction is set in BC1 is generated.

When each of the processing nodes A to C (100) approves the transaction data D (corresponding to the processing of step S703 in FIG. 7), each of the processing nodes A to C (100) attaches a time stamp indicating that the transaction data D is approved.

A reference sign D1 in FIG. 9 indicates the result of approval of the transaction data D by each of the processing nodes A to C (100), which corresponds to, for example, the block data D1 described above shared by the respective processing nodes A to C (100) in BC1. It is assumed that the processing nodes B, C, and A have the earlier time stamps in the block data D1 in that order. In this case, the respective processing nodes A to C (100) are enabled to attempt to submit the remote transaction in order of the processing nodes B, C, and A.

According to the priority order determination described with reference to FIG. 9, each of the processing nodes A to C (100) and the signature server 150 do not need to carry out the priority order determination process based on a predetermined operation using the transaction data D. Note that, as illustrated in FIG. 9, the signature server 150 shares information (block data D1) regarding the priority order using time stamps, whereby the signature server 150 is also enabled to double-check the signing request from each of the processing nodes A to C (100) in the order of the time stamps.

According to the embodiment described above, each of the plurality of processing nodes 100 arranged in the first blockchain in the redundant configuration detects the generation of the transaction data related to the first transaction in the first blockchain stored therein. It controls whether or not to transmit, to the second blockchain, the second transaction to be carried out after the first transaction on the basis of the detected transaction data. As a result, the plurality of processing nodes in the first blockchain is enabled to share the same transaction data. With the plurality of processing nodes arranged in the first blockchain in the redundant configuration, any one of the processing nodes is enabled to reliably execute the second transaction on the basis of the transaction data.

Furthermore, each of the plurality of processing nodes 100 determines the priority order of execution of the second transaction (e.g., remote transaction with respect to BC2) by the plurality of processing nodes on the basis of the data contents of the transaction data. The second transaction is transmitted to the second blockchain when the own processing node has the highest priority order, and the transmission of the second transaction to the second blockchain stands by when the own processing node has the second highest or lower priority order. As a result, each of the plurality of processing nodes is enabled to autonomously determine the priority order on the basis of the shared transaction data, and the need for special exclusive control in the redundant configuration may be removed. Furthermore, since the priority order is determined on the basis of the data contents of the transaction data, the priority order differs for each new transaction data, and the highest-order processing node is determined. This makes it possible to implement horizontal processing scale-up that may evenly distribute the processing load of executing the second transaction across the plurality of processing nodes.

Furthermore, it is assumed that, among the plurality of processing nodes 100, the own processing nodes B and C have the second highest or lower priority order and a timeout occurs in the processing node A that has executed the second transaction. In this case, if the priority order of the own processing node B is the highest when the timeout occurs, the processing of transmitting the second transaction to the second blockchain is executed. As a result, in a case where the processing node A that has executed the remote transaction may not complete the remote transaction due to a trouble such as failure, communication, or the like, it becomes possible to continue the remote transaction by a processing node having the second highest or lower priority order on the basis of the priority order.

Furthermore, each of the plurality of processing nodes 100 may determine the priority order of the execution of the second transaction by its own processing node and other processing nodes by performing a hash operation on the data contents of the transaction data. As a result, the plurality of processing nodes is enabled to identify the priority order of its own processing node and the other processing nodes on the basis of the shared transaction data, and may execute the remote transaction in accordance with this priority order.

Furthermore, each of the processing nodes 100 may attach a time stamp when the transaction data is detected, and may determine the priority order of the execution of the second transaction by its own processing node and the other processing nodes on the basis of the time order of the time stamps. As a result, the plurality of processing nodes is enabled to identify the priority order of its own processing node and the other processing nodes on the basis of the shared transaction data, and may execute the remote transaction in accordance with this priority order.

Furthermore, when the second transaction is generated, the plurality of processing nodes 100 may issue a signing request for the transaction data to the signature server 150, execute the second transaction upon reception of a signature permission from the signature server, and stand by for the second transaction when no signature permission is given from the signature server. For example, the signature server also determines the priority order based on the transaction data in a similar manner to the processing nodes, whereby the remote transaction execution order determined by the processing nodes may be double-checked by the signature server 150, and the remote transaction may be reliably executed.

As described above, according to the embodiment, it becomes possible to obtain certainty of transactions by making blockchain processing nodes redundant in a case of carrying out a remote transaction in which the first blockchain and the second blockchain are linked. Furthermore, the plurality of processing nodes autonomously executes the remote transaction based on the priority order even in the redundant configuration, whereby the need for special exclusive control between a plurality of blockchains may be removed, and each of the processing nodes is enabled to execute the remote transaction with simple processing.

Note that the control method described in the embodiment of the present invention may be implemented by causing a processor such as a server to execute a program prepared in advance. The present control method is recorded on a computer-readable recording medium such as a hard disk, a flexible disk, a compact disc-read only memory (CD-ROM), a digital versatile disk (DVD), a flash memory, or the like, and is read from the recording medium and executed by a computer. Furthermore, the present control method may also be distributed via a network such as the Internet.

### CITATION LIST

### PATENT DOCUMENT

Patent Document 1: Japanese Laid-open Patent Publication No. 2018-166000
Patent Document 2: Japanese Laid-open Patent Publication No. 2008-276692
Patent Document 3: Japanese Laid-open Patent Publication No. 2019-074910

### REFERENCE SIGNS LIST

100 Processing node
150 Signature server
200 Smart contract (SC)
201 Cooperation scenario storage means
202 Cooperation scenario execution means
203 Trigger monitoring means
211 Remote transaction reception means
212 Trigger transaction reference means
213 Execution priority determination means
214 Approval signature acquisition means
215 Remote transaction submission means
216 Timeout timing means
221 Trigger transaction reference means
222 Signature permission rule storage means
223 Execution priority determination means
224 Approval signature attaching means
301 CPU
302 Memory
303 Network interface
305 Recording medium
310 Network
BC1 First blockchain
BC2 Second blockchain
D Transaction data

## Claims

1. A control method implemented by a computer operable as one of a plurality of processing nodes arranged in a redundant configuration in a first blockchain, the control method comprising:
detecting generation of transaction data related to a first transaction in the first blockchain stored in each of the processing nodes; and
controlling whether or not to transmit a second transaction to be executed after the first transaction to a second blockchain on a basis of the detected transaction data.

2. The control method according to claim 1, wherein
each of the plurality of processing nodes is configured to:
determine a priority order of execution of the second transaction by the plurality of processing nodes on a basis of data contents of the transaction data;
transmit the second transaction to the second blockchain when the priority order of an own processing node is highest; and
stand by for transmission of the second transaction to the second blockchain when the priority order of the own processing node is second highest or lower.

3. The control method according to claim 2, wherein
the plurality of processing nodes is configured to:
in a case where the priority order of the own processing node is second highest or lower and a timeout occurs in the processing node that has executed the second transaction,
transmit the second transaction to the second blockchain when the priority order of the own processing node is highest at a time of the timeout occurrence.

4. The control method according to claim 2, wherein
each of the plurality of processing nodes is configured to:
determine the priority order of the execution of the second transaction by the own processing node and another processing node by performing a hash operation on the data contents of the transaction data.

5. The control method according to claim 2, wherein
each of the plurality of processing nodes is configured to:
attach a time stamp at a time of the detection of the transaction data, and determine the priority order of the execution of the second transaction by the own processing node and another processing node on a basis of a time order of the time stamp.

6. The control method according to claim 1, wherein
the plurality of processing nodes is configured to:
issue a signing request for the transaction data to a signature server when the second transaction is generated;
execute the second transaction upon reception of signature permission from the signature server; and
stand by for the second transaction when there is no signature permission from the signature server.

7. The control method according to claim 6, wherein
the signature server is configured to:
determine a priority order of execution of the second transaction by the plurality of processing nodes on a basis of data contents of the transaction data;
give the signature permission in response to the signing request when the priority order of the processing node that has issued the signing request is highest; and
give no signature permission in response to the signing request when the priority order of the processing node that has issued the signing request is second highest or lower.

8. A control program comprising instructions which, when executed by each of computers operable as a plurality of causing each of computers operable as processing nodes arranged in a redundant configuration in a first blockchain to cause the each computer to perform processing, the processing comprising:
detecting generation of transaction data related to a first transaction in the first blockchain stored in each of the processing nodes; and
controlling whether or not to transmit a second transaction to be executed after the first transaction to a second blockchain on a basis of the detected transaction data.

9. An information processing apparatus operable as one of a plurality of processing nodes arranged in a redundant configuration in a first blockchain, the information processing apparatus comprising
a control unit configure to:
detect generation of transaction data related to a first transaction in the first blockchain stored in each of the processing nodes; and
control whether or not to transmit a second transaction to be executed after the first transaction to a second blockchain on a basis of the detected transaction data.
